# EUROPEAN PATENT SPECIFICATION

(11) **EP 1 534 770 B1**
(45) Date of publication and mention of the grant of the patent: **27.02.2013**
(21) Application number: 03792952.8
(22) Date of filing: 26.06.2003
(51) Int. Cl.: C08J 5/22, B01D 69/12, B01D 67/00

(54) **PROCESS FOR PREPARING MULTI-LAYER PROTON EXCHANGE MEMBRANES AND MEMBRANE ELECTRODE ASSEMBLIES**
VERFAHREN ZUR HERSTELLUNG VON PROTONENAUSTÄUSCHERMEMBRANE UND MEMBRANELEKTRODEVORRICHTUNGEN
PROCEDE D'ELABORATION DE MEMBRANES ECHANGEUSES DE PROTONS MULTICOUCHE, ET ENSEMBLES ELECTRODE A MEMBRANE

(30) Priority: 21.08.2002 US 224848
(43) Date of publication of application: 01.06.2005
(73) Proprietor: 3M Innovative Properties Company, St. Paul, MN 55133-3427 (US)
(72) Inventor: HAMROCK, Steven, J., Saint Paul, MN 55133-3427 (US); SERIM, Pinar, E., Saint Paul, MN 55133-3427 (US); LEWIN, John, L., Saint Paul, MN 55133-3427 (US); LEE, Shawn, W., Saint Paul, MN 55133-3427 (US)
(74) Representative: Vossius & Partner
(86) International application number: PCT/US2003/020299
(87) International publication number: WO 2004/018549

(56) References cited:
- EP-A- 0 385 427
- EP-A- 0 477 432
- US-A- 4 486 277
- US-A- 4 586 992
- US-A- 4 983 264
- PATENT ABSTRACTS OF JAPAN vol. 002, no. 126 (C-025), 21 October 1978 (1978-10-21) & JP 53 092394 A (ASAHI CHEM IND CO LTD), 14 August 1978 (1978-08-14)
- DATABASE WPI Section EI, Week 200365 Derwent Publications Ltd., London, GB; Class X16, AN 2003-680474 XP002261574 & CN 1 398 011 A (SHENLI SCI TECHNOLOGY CO LTD SHANGHAI), 19 February 2003 (2003-02-19)

## Description

### TECHNICAL FIELD

This invention relates to preparing multi-layer proton exchange membranes and membrane electrode assemblies.

### BACKGROUND

Electrochemical devices, including fuel cells, electrolyzers, chlor-alkali cells, and the like, are typically constructed from a unit referred to as a membrane electrode assembly (MEA). In a typical electrochemical cell, the MEA includes a proton exchange membrane (PEM) in contact with cathode and anode electrode layers that include catalytic material, such as Pt or Pd. The PEM functions as a solid electrolyte that transports protons that are formed at the anode to the cathode, allowing a current of electrons to flow in an external circuit connecting the electrodes. The PEM should not conduct electrons or allow passage of reactant gases, and should retain its structural strength under normal operating conditions.

US 4 586 992 describes a process for producing potassium hydroxide by electrolysis of potassium chloride in an electrolytic cell. Said cell comprises an anode compartment and a cathode compartment partitioned by a cation exchange membrane. The process comprises supplying potassium chloride to the anode compartment for the electrolysis to form potassium hydroxide in the cathode compartment, wherein said cation exchange membrane is a multi-layer membrane comprising at least two layers including a main layer made of a perfluorocarbon polymer having carboxylic acid groups as its ion exchange groups with an ion exchange capacity of from 0.9 to 1.6 meq/g dry resin and having a thickness of from 80 to 300 µm and a sulfonic acid film surface layer on the anode compartment side. Said surface layer is made of a perfluorocarbon polymer having sulfonic acid groups as its ion exchange groups with an ion exchange capacity of from 0.5 to 1.5 meq/g dry resin and having a thickness of from 5 to 50 µm.

### SUMMARY

In one aspect, the invention features a process for preparing multi-layer PEM's. Such PEM's are desirable because the number and identity of the individual layers can be tailored to produce a membrane having particular chemical and/or physical properties. The process includes (a) providing an article that includes an ionomer-containing layer adhered to a substrate, the layer having a surface available for coating; (b) applying a dispersion or solution (e.g., an ionomer dispersion.or solution) to the membrane surface; (c) drying the dispersion or solution to form a multi-layer PEM adhered to the substrate; and (d) removing the multi-layer PEM from the substrate. During the application step, the ionomer-containing layer adhered to the substrate absorbs solvent from the dispersion or solution and swells. By applying the dispersion or solution to the ionomer-containing layer while it is adhered to the substrate, rather than being free-standing, the layer is constrained to swell primarily in a direction normal to the layer surface. This minimizes wrinkling, tearing, unevenness, and other defects that can occur in the absence of the substrate and compromise the performance of the membrane.

According to a further aspect of the invention, a process for preparing a multi-layer article is provided, the process comprising: a) providing a proton exchange membrane adhered to a substrate, said membrane having a surface available for coating; b) applying a dispersion or solution comprising a catalyst to said surface of said membrane; c) drying said dispersion or solution to form a multi-layer article adhered to said substrate, said article comprising said membrane and a catalyst layer; and d) removing said article from said substrate.

Another application of this process includes the preparation of MEA's and MEA precursors in which a PEM is adhered to a substrate and a catalyst solution or dispersion is applied to the exposed surface of the PEM. When dried, the catalyst forms an electrode layer. Combining this structure with a second electrode layer yields an MEA. The process achieves intimate contact between the catalyst and the electrode, which is important for ionic connectivity and optimum fuel cell performance, while minimizing wrinkling, tearing, and other defects that result from unconstrained swelling.

The invention also features MEA's incorporating PEM's. For example, in one embodiment, the PEM of an MEA includes a plurality of layers, at least one of which is an ionomer, and has a total dry thickness of less than 2 mils (50 microns). Preferably, the thickness of each individual layer is no greater than 1.5 mils (37.5 microns), and more preferably no greater than 1 mil (25 microns).

The details of one or more embodiments of the invention are set forth in the accompanying drawings and the description below. Other features, objects, and advantages of the invention will be apparent from the description and drawings, and from the claims.

### DESCRIPTION OF DRAWINGS

FIG. 1 shows a polarization curve for the MEA's of Example 1.
FIG 2 shows a polarization curve for the MEA's of Example 2.
FIG. 3 shows a polarization curve for the MEA's of Example 3.
FIG. 4 shows a polarization curve for the MEA's of Example 4.
FIG. 5 shows a polarization curve for the MEA's of Example 5.
FIG 6 shows a polarization curve for the MEA's of Example 6.
FIG 7 shows a polarization curve for the MEA's of Example 7.

### DETAILED DESCRIPTION

Multi-layer-PEM's are prepared by coating a solution or dispersion, preferably including an ionomer, onto the surface of an ionomer-containing layer adhered to a substrate, followed by drying to remove solvent. The process may be repeated as many times as necessary to produce a PEM having the desired number of layers.

The ionomer-containing layer adheres to the substrate during the coating and drying of the subsequent layers, rather than simply resting on the substrate. Adhesion may be achieved by applying an ionomer solution or dispersion to the substrate using know methods, including casting or coating methods. For example, the ionomer solutions or dispersions can be hand-spread or hand-brushed, knife-coated, roll coated, dip or curtain coated, die coated, spin coated, extruded, or slot coated onto the substrate. Alternatively, a pre-formed film can be attached to the substrate by, for example, lamination. Regardless of the particular application technique, however, the adhesion of the ionomer-containing layer to the substrate should be great enough so that when the layer absorbs solvent during coating, the layer is constrained to swell primarily in the direction normal to the layer surface, thereby preventing wrinkling, tearing, and the like. However, upon conclusion of the coating processes, the ionomer-containing layer should be cleanly removable from the substrate.

The substrates may be porous or substantially non-porous. Suitable substrates include glass and polymer films, such as, for example, films made from polyester (e.g., polyethylene terephthalate), polyethylene, nylon, polyimide, polypropylene, and the like. Multi-layer substrates can be used as well.

Useful ionomers for the ionomer-containing layer are preferably film-forming polymers but may be non-film-forming polymers. They may be fluorinated, including partially fluorinated and, more preferably, fully fluorinated. They may contain pendant acid groups such as phosphonyl, more preferably carbonyl, and most preferably sulfonyl. Other useful fluorocarbon-type ionomers include copolymers of olefins containing aryl perfluoroalkyl sulfonylimide cation-exchange groups, having the general formula (I): CH₂=CH-Ar-SO₂-N⁻-SO₂ (C₁₊ₙF₃₊₂ₙ), wherein n is 0-11, preferably 0-3, and most preferably 0, and wherein Ar is any substituted or unsubstituted divalent aryl group, preferably monocyclic and most preferably a divalent phenyl group, referred to as phenyl herein. Ar may include any substituted or unsubstituted aromatic moieties, including benzene, naphthalene, anthracene, phenanthrene, indene, fluorene, cyclopentadiene and pyrene, wherein the moieties are preferably molecular weight 400 or less and more preferably 100 or less. Ar may be substituted with any group as defined herein. One such resin is p-STSI, an ion conductive material derived from free radical polymerization of styrenyl trifluoromethyl sulfonylimide (STSI) having the formula (III): styrenyl-SO₂ N⁻-SO₂CF₃. Most preferably, the ionomer is a film-forming fluoropolymer having pendent sulfonic acid groups. Preferred film-forming ionomeric fluoropolymers include tetrafluoroethylene copolymers having pendent sulfonic acid groups such as NAFION (DuPont, Wilmington, DE), FLEMION (Asahi Glass Co. Ltd., Tokyo, Japan), and a copolymer of tetrafluoroethylene and a sulfonyl fluoride monomer having the formula (III): CF₂=CF-O-(CF₂)₂-SO₂F, which hydrolyzes to form a sulfonic acid. Blends may also be used, e.g., as described in Hamrock et al., U.S. 6,277,512.

The number and identity of the layers applied to the initial ionomer-containing layer to form the PEM are a function of the desired chemical and physical properties of the PEM. For example, one or more of the additional layers can be ionomer layers. Examples of suitable ionomers are described above. The ionomers may be the same as, or different from, the initial ionomer. For example, multiple ionomer layers can be formed, each having the same chemical composition but different molecular weights.

One or more of the layers can include additives selected to improve the mechanical, thermal, and/or chemical properties of the PEM. Preferably, these additives are thermally stable and not electrically conductive. For example, the mechanical strength of the PEM can be enhanced by incorporating reinforcing particles into one or more layers of the PEM. Examples of suitable reinforcing particles include metal oxides such as silica, zirconia, alumina, titania, and the like. Such fillers, as well as hydrophilic additives, can also be incorporated in one or more layers of the PEM to improve the hydration properties of the PEM. Other fillers, such as, for example, boron nitride, can be used to enhance the thermal conductivity of the PEM, whereas boron titanate can increase the dielectric constant of the PEM. Fluoropolymer fillers, such as copolymers of hexafluoropropylene and vinylidene fluoride, can also be included in one or more of the layers, as described in Hamrock et al., U.S. 6,277,512.

The mechanical strength of the PEM can also be increased by incorporating a crosslinked or crosslinkable polymer into one or more layers of the construction. Examples of suitable crosslinked and crosslinkable polymers are described in Hamrock et al., U.S. 6,277,512. The polymer can be crosslinked by any known technique, such as, thermal or radiation crosslinking (e.g., UV or electron beam) and crosslinking by use of a crosslinking agent. The polymer may be crosslinked prior to incorporation into the ionomer membrane or *in situ* following incorporation into the membrane.

One or more of the layers can also include a porous material. Porous materials can be made from any suitable polymer, including, for example, polyolefins (e.g., polyethylene, polypropylene, polybutylene), polyamides, polycarbonates, cellulosics, polyurethanes, polyesters, polyethers, polyacrylates, and halogenated polymers (e.g., fluoropolymers, such as polytetrafluoroethylene), and suitable combinations thereof. Both woven and non-woven materials may be used as well.

In addition to preparing the PEM, the process can be used to prepare an MEA by taking a PEM adhered to a substrate and applying a catalyst solution or dispersion to the exposed surface of the PEM, followed by drying to form an electrode layer. The solution or dispersion, often referred to as an "ink," includes electrically conductive catalyst particles (e.g., platinum, palladium, and (Pt-Ru)Oₓ supported on carbon particles) in combination with a binder polymer. The catalyst ink can be deposited on the surface of the membrane by any suitable technique, including spreading with a knife or blade, brushing, pouring, spraying, or casting. The coating can be built up to the desired thickness by repetitive application.

One or both of the electrode layers can be applied to the PEM according to this process. Alternatively, one of the electrode layers can be deposited directly onto the membrane by a "decal" process. In one embodiment of the decal process, a first catalyst layer is coated onto the membrane as described above and a second catalyst layer is then applied by decal. In another embodiment of the decal process, the catalyst ink is coated, painted, sprayed, or screen printed onto a substrate and the solvent is removed. The resulting decal is then subsequently transferred from the substrate to the membrane surface and bonded, typically by the application of heat and pressure.

### EXAMPLES

### Catalyst Dispersion

Carbon-supported catalyst particles (the catalyst metal being either Pt for cathode use or Pt plus Ru for anode use) are dispersed in an aqueous dispersion of NAFION 1100 (DuPont, Wilmington, DE), and the resulting dispersion is heated to 100°C for 30 minutes with stirring using a standard magnetic stirring bar. The dispersion is then cooled, followed by high shear stirring for 5 minutes with a HANDISHEAR hand-held stirrer (Virtis Co., Gardiner, NY) at 30,000 rpm to form the catalyst dispersion.

### Gas Diffusion Layer & Catalyst-Coated Gas Diffusion Layer

A sample of 0.2 mm thick Toray Carbon Paper (Cat. No. TGP-H-060, Toray Industries, Inc., Tokyo, Japan) is hand-dipped in an approximately 1% solids TEFLON^{™} dispersion (prepared by diluting a 60% solids aqueous dispersion available from DuPont, Wilmington, DE under the designation T-30) then dried in an air oven at 50-60°C to drive off water and form a gas diffusion layer (GDL).

The GDL is coated with a carbon black dispersion as follows. A dispersion of VULCAN^{™} X72 carbon black (Cabot Corp., Waltham, MA) in water is prepared under high shear mixing using a Ross mixer (Charles Ross & Son Co., Hauppauge, NY equipped with a 7.6 cm blade at 4500 rpm. In a separate container, an aqueous dispersion of TEFLON^{™} (T-30, DuPont, Wilmington, DE) is diluted with deionized water to 5% solids. The carbon black dispersion is then added to the TEFLON^{™} dispersion with stirring. The resulting mixture is filtered under vacuum to form a retentate that is an approximately 20% solids mixture of water, TEFLON^{™}, and carbon black. The pasty mixture is treated with approximately 3.5% by weight of a surfactant (TRITON X-100, Union Carbide Corp., Danbury, CT), followed by the addition of isopropyl alcohol (IPA, Aldrich Chemical Co., Milwaukee, WI) such that the w/w proportion of IPA to paste is 1.2:1. The diluted mixture is again stirred at high shear using a three-blade VERSAMIXER (Charles Ross & Son Co., Hauppauge, NY; anchor blade at 80 rpm, dispersator at 7000 rpm, and rotor-stator emulsifier at 5000 rpm) for 50 minutes at 10°C.

The dispersion thus obtained is coated onto the dried Toray Carbon Paper at a wet thickness of approximately 0.050 mm using a notch bar coater. The coated paper is dried overnight at 23°C to remove IPA, followed by oven drying at 380°C for 10 minutes to produce a carbon-coated GDL having a thickness of approximately 0.025 mm and a basis weight (carbon black plus TEFLON^{™}) of approximately 15 g/m².

The carbon-coated GDL is hand-brushed with the catalyst dispersion described above in an amount sufficient to yield 0.5 mg of catalyst metal per square centimeter, and dried to form a catalyst-coated gas diffusion layer (CCGDL).

### Fuel Cell Performance Evaluation

MEA's are mounted in a test cell station (Fuel Cell Technologies, Inc., Albuquerque, NM). The test station includes a variable electronic load with separate anode and cathode gas handling systems to control gas flow, pressure, and humidity. The electronic load and gas flow are computer controlled. Fuel cell polarization curves are obtained under the following test parameters: electrode area of 50 cm²; cell temperature of 70°C, anode gas pressure of 0 psig; anode gas flow rate at 800 standard cc/min; cathode gas pressure of 0 psig; cathode flow rate at 1800 standard cc/min. Humidification of the cathode and anode is provided by steam injection (injector temperature of 140°C) and equilibrating overnight to 100% RH at the anode and cathode for Examples 1-5, and 120% RH at the anode and 100% RH at the cathode for Examples 6-7.

Each fuel cell is brought to operating conditions at 70°C under hydrogen and air flows. Test protocols are initiated after 12 hours of operation.

### Example 1

A base ionomer film was prepared by coating an alcohol solution of 20% by weight NAFION 1000 onto a 6.8 mil PVC-primed polyethylene terephthalate (PET) substrate using a notch bar coater. The base film had a dry thickness of 1.0 mil. A layer of a 10% by weight solution of a ionomer in the form of a copolymer of tetrafluoroethylene and CF₂=CF-O-(CF₂)₂-SO₂F (equivalent weight = 800 g/mole acid) in water was cast over the base film with a Gardner knife (wet thickness = 4 mils) and dried to yield a 2-layer proton exchange membrane having a total dry thickness

(NAFION plus ionomer) of 1.2 mils. Care was taken to avoid casting the solution over the edge of the base film so as not to incur delamination and wrinkling of the base film at the edge.

MEA's were prepared by sandwiching the proton exchange membrane between two CCGDL's, prepared as described above, with the catalyst coating facing the membrane. A gasket of TEFLON^{™}-coated glass fiber was also placed on each side. Because the CCGDL's are smaller in surface area than the membrane, each fit in the window of the respective gasket. The height of the gasket was 70% of the height of the CCGDL to allow 30% compression of the CCGDL when the entire assembly was pressed. A 50 micrometer thick, 15 cm x 15 cm thick sheet of polyimide was placed on each side. The assembly was then pressed in a Carver Press (Fred Carver Co., Wabash, IN) for 10 minutes at a pressure of 30 kg/cm² and a temperature of 130°C to form the finished MEA. The polyimide sheets were then peeled away, leaving a 5-layer MEA.

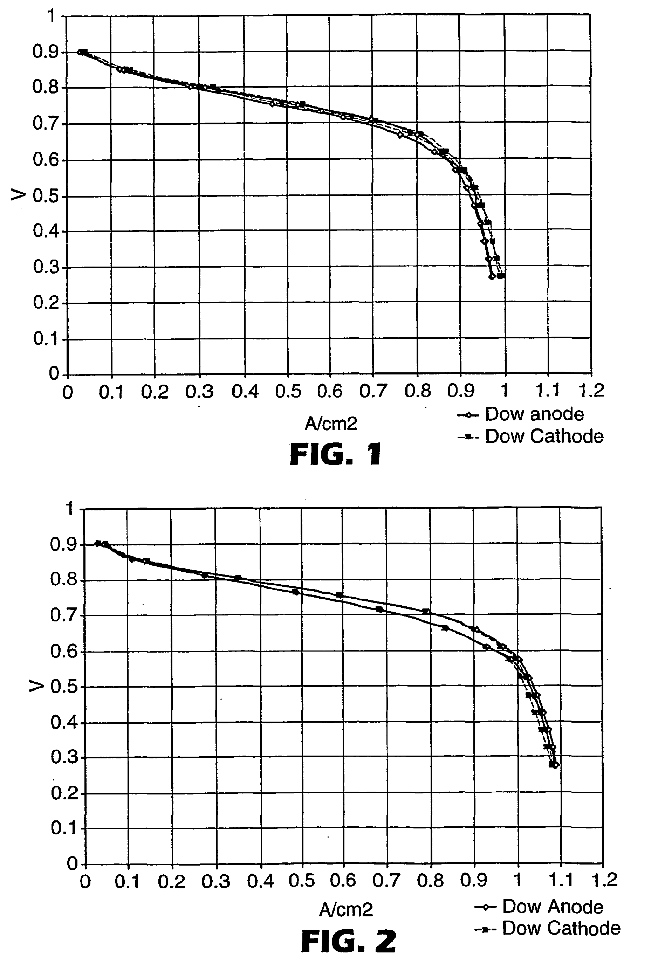

Four humidified MEA's were tested according to the Fuel Cell Performance Evaluation protocol described above. Fig. 1 shows a potentiometric dynamic scan (PDS) polarization plot for the MEA's prepared in this example. The orientation of the membrane with respect to the anode (H₂ electrode) and cathode (air electrode) is indicated in the figure. The performance of the MEA between 0.6 and 0.8V is related to the performance of the proton exchange membrane. In general, it is desirable to maximize current density (A/cm²) within this voltage region. The plot shown in Fig. 1 demonstrates that the MEA's achieved high current densities in the 0.6 to 0.8V range.

### Example 2

A base ionomer film having a dry thickness of 0.7 mil was prepared as described in Example 1 using NAFION 1000. A second layer of a 10% by weight solution of an ionomer in the form of a copolymer of tetrafluoroethylene and CF₂=CF-O-(CF₂)₂-SO₂F (equivalent weight = 800 g/mole acid) in water was cast over the base film with a Gardner knife (wet thickness = 2 mils). A third layer of this ionomer in water was then cast over the first layer (wet thickness = 2 mils) to yield a 3-layer proton exchange membrane having a dry thickness of 1.0 mil.

Four MEA's having dispersed catalyst on both surfaces were prepared as described in Example 1 and tested according to the Fuel Cell Performance Evaluation protocol described above. Fig. 2 shows a PDS polarization plot for the MEA's prepared in this example. The orientation of the membrane with respect to the anode (H₂ electrode) and cathode (air electrode) is indicated in the figure. The plot shown in Fig. 2 demonstrates that the MEA's achieved high current densities in the 0.6 to 0.8V range.

### Example 3

A base ionomer film was prepared by hand spreading an alcohol solution of 20% by weight NAFION 1000 in alcohol onto a 0.5 mil thick porous polytetrafluoroethylene film (Tetratex 06258-4, available from Tetratec, Feasterville, PA) adhered to a glass plate. The base film, consisting of Tetratex and NAFION, had a wet thickness of 2 mils.

A 20% alcohol solution of NAFION 1000 was blended with a 10% dispersion of A130 (AEROSIL fumed silica having a surface area of 130 m²/g surface area, available from Degussa, Ridgefield Park, NJ) in ethanol and placed on a shaker overnight. A layer of the NAFION 1000/A130 blend was then cast over the base film with a Gardner knife to yield a proton exchange membrane having a total dry thickness of 0.7 mil.

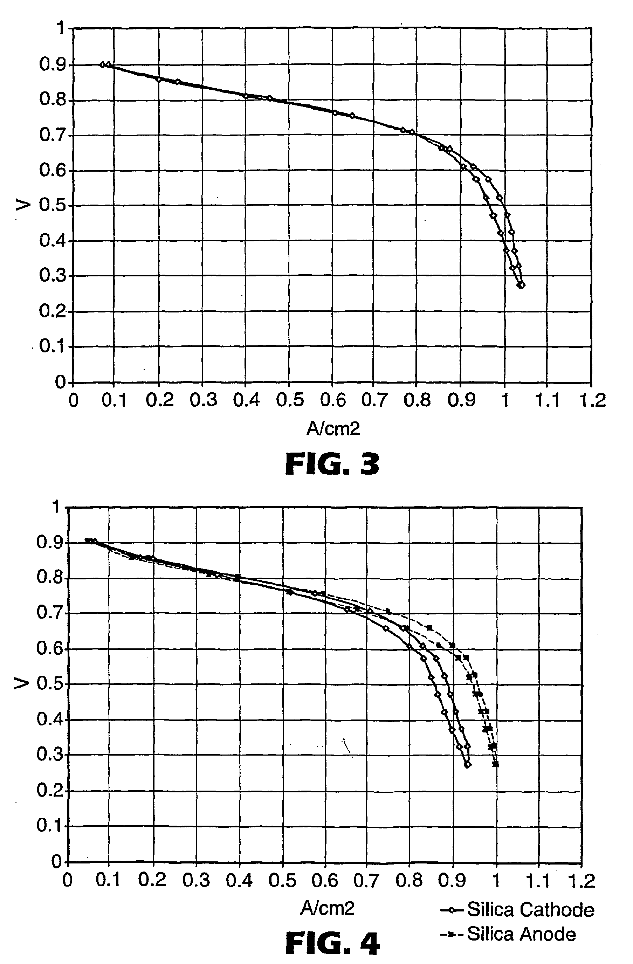

Two MEA's having dispersed catalyst on both surfaces were prepared as described in Example 1 and tested according to the Fuel Cell Performance Evaluation protocol described above, with the exception that the data was acquired with a cathode humidified at half saturation. Fig. 3 shows a PDS polarization plot for the MEA's prepared in this example. The orientation of the membrane with respect to the anode (H₂ electrode) and cathode (air electrode) is indicated in the figure. The designation "1X/0.5X" refers to the amount of humidification on the anode and cathode, respectively. The plot shown in Fig. 3 demonstrates that the MEA's achieved high current densities in the 0.6 to 0.8V range.

### Example 4

A base ionomer film having a wet thickness of 10 mils was prepared as in Example 1 except that the film was hand spread onto a glass plate. A NAFION 1000/A130 blend was prepared as in Example 3, and a layer was cast over the base film with a Gardner knife (wet thickness = 2 mils) to yield a 3-layer proton exchange membrane having a dry thickness of 1.1 mils.

Four MEA's having dispersed catalyst on both surfaces were prepared as described in Example 1 and tested according to the Fuel Cell Performance Evaluation protocol descried above. Fig. 4 shows a PDS polarization plot for the MEA's prepared in this example. The orientation of the membrane with respect to the anode (H₂ electrode) and cathode (air electrode) is indicated in the figure. The plot shown in Fig. 4 demonstrates that the MEA's achieved high current densities in the 0.6 to 0.8V range.

### Example 5

Residual water was removed from a 20% alcohol solution of NAFION 1000 by repetitive evaporation using a 50:50 mixture of methanol and ethanol until the solution became very viscous. This process was repeated until the mixture was stable when blended with a 15% solution of FLUOREL FC 2145 fluoroelastomer resin (Dyneon, Oakdale, MN) in methanol.

A base ionomer film having a wet thickness of 15 mils was prepared by hand spreading as in Example 4. A NAFION 1000/A130 blend solution was prepared as in Example 3, and a layer cast over the base film with a Gardner knife (wet thickness = 2 mils) to yield a 3-layer proton exchange membrane having a dry thickness of 1.0 mil.

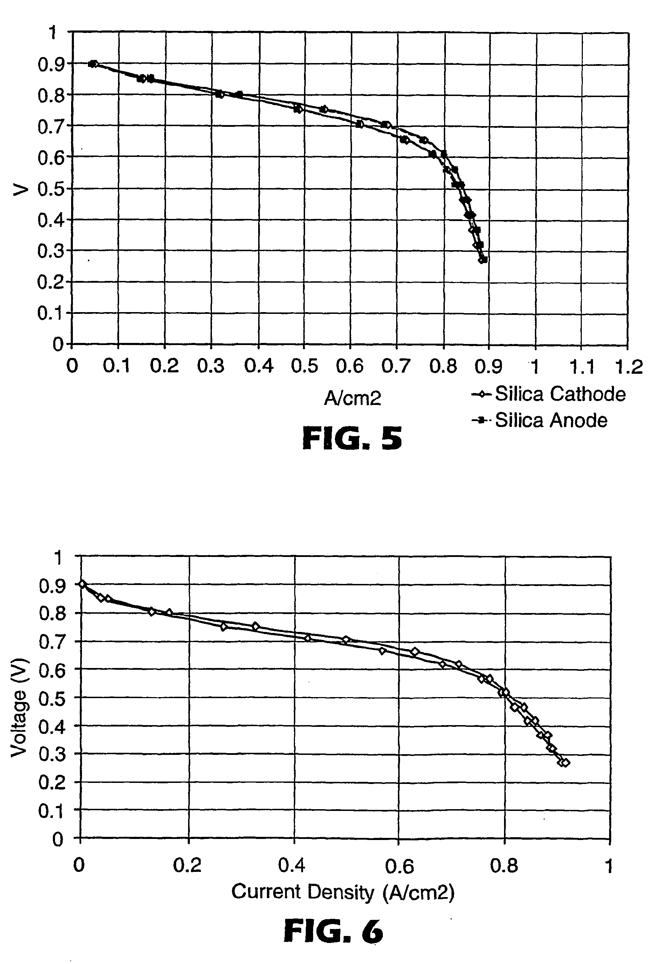

Four MEA's having dispersed catalyst on both surfaces were prepared as described in Example 1 and tested according to the Fuel Cell Performance Evaluation protocol described above. Fig. 5 shows a PDS polarization plot for the MEA's prepared in this example. The orientation of the membrane with respect to the anode (H₂ electrode) and cathode (air electrode) is indicated in the figure. The plot shown in Fig. 5 demonstrates that the MEA's achieved high current densities in the 0.6 to 0.8V range.

### Example 6

A 20% dispersion of NAFION 1000 in alcohol was cast onto a vinyl-primed 7 mil thick PET liner at 3 feet/minute and passed through an 8 foot drying oven at 125°C, resulting in a 1 mil thick NAFION film adhered to the liner. A catalyst dispersion containing Pt and Ru metal, prepared as described above, was then cast onto the NAFION film using a #48 Meyer bar. The coating was dried in air to give a flat black continuous film that remained adhered to the vinyl-primed liner. Next, the construction was peeled from the vinyl-primed liner. A second catalyst dispersion containing Pt metal, prepared as described above, was applied to the opposite side of the NAFION film via a decal transfer method, which involved coating the catalyst with a #28 Meyer bar onto a 125 lines/inch microstructured liner of the type described in Mao et al., U.S. 6,238,534. The coated liner was then applied to the exposed surface of the NAFION film at 270°C for 3 minutes with a 6 ton load. Next, GDL's, prepared as described above, were hot bonded to both sides of the resulting three-layer construction at 270°F for 10 minutes with a 1.5 ton load.

The resulting five-layer MEA's were tested according to the Fuel Cell Performance Evaluation protocol described above. Fig. 6 shows a polarization plot for the two MEA's prepared in this example. The plot shown in Fig. 6 demonstrates that the MEA's achieved high current densities in the 0.6 to 0.8V range.

### Example 7

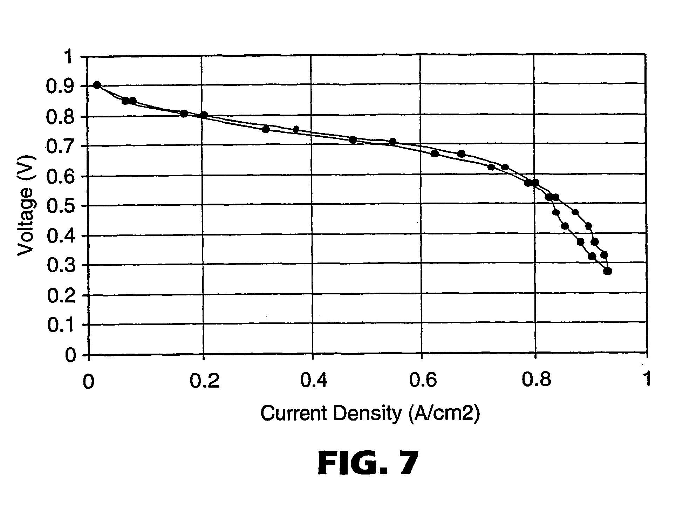

MEA's were prepared and tested as in Example 6 with the exception that the cathode catalyst coating was hand-brushed onto the membrane according to the procedure described in Example 1. Fig. 7 shows a polarization plot for the two five-layer MEA's prepared in this example. The plot shown in Fig. 7 demonstrates that the MEA's achieved high current densities in the 0.6 to 0.8V range.

A number of embodiments of the invention have been described. Nevertheless, it will be understood that various modifications may be made without departing from the spirit and scope of the invention. Accordingly, other embodiments are within the scope of the following claims.

## Claims

1. A process for preparing a multi-layer proton exchange membrane comprising:
(a) providing an article comprising a layer adhered to a substrate, said layer comprising a first ionomer and having a surface available for coating;
(b) applying a dispersion or solution to said surface of said layer;
(c) drying said dispersion or solution to form a multi-layer proton exchange membrane adhered to said substrate; and
(d) removing said multi-layar proton exchange membrane from said substrate.

2. A process for preparing a multi-layer article comprising:
(a) providing a proton exchange membrane adhered to a substrate, said membrane having a surface available for coasting;
(b) applying a dispersion or solution comprising a catalyst to said surface of said membrane;
(c) drying said dispersion or solution to form a multi-layer article adhered to said substrate, said article comprising said membrane and a catalyst layer; and
(d) removing said article from said substrate.

3. A process according to claim 2 further comprising combining said article with a second catalyst layer to form a membrane electrode assembly.

4. A process according to any of claims 1- 3 wherein said substrate is selected from the group consisting of polyesters, polyimides, polyolefins, and combinations thereof.

5. A proton exchange membrane comprising a plurality of layers, at least one of which comprises an ionomer,
said membrane having a total dry thickness of less than 2 mils (50 microns), wherein each layer of said membrane has a dry thickness no greater than 1 mil (25 microns).

6. A proton exchange membrane according to claim 5 wherein said ionomer comprises a fluoropolymer having pendant sulfonic acid groups.

7. A membrane electrode assembly comprising:
(a) a proton exchange membrane comprising a plurality of layers, at least one of which comprises an ionomers,
said membrane having a total dry thickness of less than 2 mils (50 microns) and a pair of opposed surfaces; and
(b) a catalyst layer on each of the opposed surfaces of said proton exchange membrane.

## Patentansprüche

1. Verfahren zur Herstellung einer mehrschichtigen Protonenaustauschmembran, bei dem man:
(a) einen Gegenstand bereitstellt, der eine haftend auf ein Substrat aufgebrachte Schicht umfasst, wobei die Schicht ein erstes Ionomer umfasst und eine zum Beschichten verfügbare Oberfläche aufweist;
(b) auf die Oberfläche der Schicht eine Dispersion oder Lösung aufbringt;
(c) die Dispersion oder Lösung zur Bildung einer haftend auf das Substrat aufgebrachten mehrschichtigen Protonenaustauschmembran trocknet und
(d) die mehrschichtige Protonenaustauschmembran von dem Substrat entfernt.

2. Verfahren zur Herstellung eines mehrschichtigen Gegenstands, bei dem man:
(a) eine haftend auf ein Substrat aufgebrachte Protonenaustauschmembran bereitstellt, wobei die Membran eine zum Beschichten verfügbare Oberfläche aufweist;
(b) auf die Oberfläche der Membran eine Dispersion oder Lösung, die einen Katalysator umfasst, aufbringt;
(c) die Dispersion oder Lösung zur Bildung eines haftend auf das Substrat aufgebrachten mehrschichtigen Gegenstands trocknet, wobei der Gegenstand die Membran und eine Katalysatorschicht umfasst; und
(d) den Gegenstand von dem Substrat entfernt.

3. Verfahren nach Anspruch 2, bei dem man ferner den Gegenstand zur Bildung einer Membran-Elektroden-Anordnung mit einer zweiten Katalysatorschicht kombiniert.

4. Verfahren nach einem der Ansprüche 1-3, bei dem man das Substrat aus der Gruppe bestehend aus Polyestern, Polyimiden, Polyolefinen und Kombinationen davon auswählt.

5. Protonenaustauschmembran mit mehreren Schichten, von denen mindestens eine ein Ionomer umfasst,
wobei die Membran eine Gesamttrockendicke von weniger als 2 Millizoll (50 Mikron) aufweist, wobei jede Schicht der Membran eine Trockendicke von höchstens 1 Millizoll (25 Mikron) aufweist.

6. Protonenaustauschmembran nach Anspruch 5, wobei das Ionomer ein Fluorpolymer mit Sulfonsäure-Seitengruppen umfasst.

7. Membran-Elektroden-Anordnung mit:
(a) einer Protonenaustauschmembran mit mehreren Schichten, von denen mindestens eine ein Ionomer umfasst,
wobei die Membran eine Gesamttrockendicke von weniger als 2 Millizoll (50 Mikron) und zwei gegenüberliegende Oberflächen aufweist; und
(b) einer Katalysatorschicht auf jeder der gegenüberliegenden Oberflächen der Protonenaustauschmembran.

## Revendications

1. Procédé de fabrication d'une membrane échangeuse de protons multicouche, consistant à :
(a) fournir un article comprenant une couche adhérant à un substrat, ladite couche comprenant un premier ionomère et comportant une surface disponible pour le revêtement ;
(b) appliquer une dispersion ou une solution sur ladite surface de ladite couche ;
(c) sécher ladite dispersion ou solution pour former une membrane échangeuse de protons multicouche adhérant audit substrat ; et
(d) retirer ladite membrane échangeuse de protons multicouche dudit substrat.

2. Procédé de fabrication d'un article multicouche, consistant à :
(a) fournir une membrane échangeuse de protons adhérant à un substrat, ladite membrane comportant une surface disponible pour le revêtement ;
(b) appliquer une dispersion ou une solution comprenant un catalyseur sur ladite surface de ladite membrane ;
(c) sécher ladite dispersion ou solution pour former un article multicouche adhérant audit substrat, ledit article comprenant ladite membrane et une couche de catalyseur ; et
(d) retirer ledit article dudit substrat.

3. Procédé selon la revendication 2, consistant en outre à associer ledit article à une deuxième couche de catalyseur pour former un ensemble électrode à membrane.

4. Procédé selon l'une quelconque des revendications 1 à 3, dans lequel ledit substrat est sélectionné dans le groupe constitué de polyesters, de polyimides, de polyoléfines, et de combinaisons de ceux-ci.

5. Membrane échangeuse de protons comprenant une pluralité de couches, au moins une desdites couches comprenant un ionomère, ladite membrane ayant une épaisseur totale à sec inférieure à 2 millièmes de pouce (50 microns), chaque couche de ladite membrane ayant une épaisseur à sec ne dépassant pas 1 millième de pouce (25 microns).

6. Membrane échangeuse de protons selon la revendication 5, dans laquelle ledit ionomère comprend un fluoropolymère comportant des groupes d'acide sulfonique pendants.

7. Ensemble électrode à membrane, comprenant :
(a) une membrane échangeuse de protons comprenant une pluralité de couches, au moins une desdites couches comprenant un ionomère, ladite membrane ayant une épaisseur totale à sec inférieure à 2 millièmes de pouce (50 microns) et comportant une paire de surfaces opposées ; et
(b) une couche de catalyseur sur chacune des surfaces opposées de ladite membrane échangeuse de protons.
